# EUROPÄISCHE PATENTANMELDUNG

(11) **EP 2 372 624 A1**
(43) Veröffentlichungstag der Anmeldung: **05.10.2011**
(21) Anmeldenummer: 11157520.5
(22) Anmeldetag: 09.03.2011
(51) Int. Cl.: G06Q 10/00, G06Q 30/00, G06F 17/00

(54) **Antriebsstrangkonfiguration**

(30) Priorität: 26.03.2010 DE 102010013122
(71) Anmelder: Wittenstein AG, 97999 Igersheim (DE)
(72) Erfinder: Glaser, Markus, 73460 Hüttlingen (DE); Arnold, Dieter, 97959 Assamstadt (DE); Fries Barbara, 97990 Weikersheim (DE); Boost, Benjamin, 97980 Bad Mergentheim (DE); Michel, Frank, 97990 Weikersheim (DE); Frank, Rainer, 97980 Bad Mergentheim (DE); Leidner Axel, 74238 Krautheim-Klepsau (DE); Mei, Andreas, 71706 Markgröningen (DE)
(74) Vertreter: Zimmermann & Partner

(57) **Zusammenfassung**

Verfahren zur Konfiguration eines Antriebsstrangs, insbesondere für einen elektrisch oder hydraulisch angetriebenen Antriebsstrang, mit den Schritten: Abfrage eines Kundenparameters mittels eines Eingabegeräts von einem Benutzer und Vorgabe eines Komponentenkombinationstyps in Abhängigkeit von dem Kundenparameter, Vorgabe von Applikationsdaten für den Komponentenkombinationstyp in Abhängigkeit des Kundenparameters, Anpassungs- und/oder Bestätigungs-Abfrage der Applikationsdaten mittels des Eingabegeräts, um ein Anforderungsprofil für den Antriebsstrang zu erhalten, Auswahl einer Komponentenkombination, die dem Komponentenkombinationstyp entspricht, Berechnung von Betriebsparametern für die Komponentenkombination und Überprüfen, ob die Betriebsparameter das Anforderungsprofil erfüllen.

## Beschreibung

### Gebiet der Erfindung

Die Erfindung betrifft ein Verfahren zur Konfiguration eines Antriebsstrangs nach dem Anspruch 1 und ein Computerprogrammprodukt nach dem nebengeordneten Anspruch.

### Stand der Technik

Aus dem Stand der Technik ist es bekannt, Linearantriebe teilweise automatisiert zu konfigurieren, wobei der Benutzer die Auswahl zwischen verschiedenen Systemkonzepten hat, welche durch den Hersteller vorgegeben sind. Ausserdem ist es nach der EP 1 251 444 B1 möglich, ein System aus verschiedenen Einzelkomponenten zusammenzustellen, wobei aus Vorgaben wie Stellzeiten, Hub, Zylinderlänge, Kraft oder bewegten Masse für den Benutzer Vorgaben für Einzelkomponenten gemacht werden.

Nachteilig an dem betreffenden System ist allerdings, dass nur für einzelne Komponenten bestimmte physikalische Vorgaben gemacht werden können, jedoch nicht für einen Antriebsstrang mit mehreren Komponenten.

### Offenbarung der Erfindung

Aufgabe der Erfindung ist es, die aus dem Stand der Technik bekannten Systeme, Vorrichtungen oder Verfahren zu verbessern, wobei insbesondere eine Möglichkeit geschaffen werden soll, Antriebsstränge, bei welchen mehrere Komponenten zusammenwirken, automatisiert oder teilweise automatisiert zu konfigurieren. Weiterhin ist es Aufgabe der Erfindung, eine sinnvolle oder zielführende Benutzerführung zu verwirklichen.

Die Aufgabe wird mit einem Verfahren nach dem Anspruch 1 gelöst.

Vorzugsweise wird ein oder mehrere Kundenparameter abgefragt. Kundenparameter sind insbesondere dem Kunden bekannte Rahmenbedingungen des Antriebsstrangs. Der Kundenparameter umfasst vorzugsweise ein Land, in welchem der zu konfigurierende Antriebsstrang betrieben werden soll. Dies bietet den Vorteil, dass länderspezifische Vorgaben wie eine verfügbare Netzspannung oder Sicherheitsaspekte berücksichtigt werden können. Weiterhin umfasst der Kundenparameter vorzugsweise einen Maschinentyp, in welchem der Antriebsstrang eingesetzt werden soll. Dies bietet den Vorteil, dass anhand von Erfahrungswerten abgeschätzt werden kann, welche Applikationsdaten, wie beispielsweise minimale oder maximale Beschleunigung, Drehmomente oder Ähnliches für den Anwendungsfall benötigt werden.

Vorzugsweise wird ein Komponentenkombinationstyp in Abhängigkeit von dem zumindest einen Kundenparameter vorgegeben. Mit Komponentenkombinationstyp ist insbesondere die Art des Antriebsstrangs gemeint, also beispielsweise eine Kombination aus Ritzel und Zahnstange oder Motor und Getriebe. Dies bietet den Vorteil, dass die Applikationsdaten für einen konkreten Komponentenkombinationstyp abgerufen werden können. Bei vorteilhaften Ausführungsformen der Erfindung ist der Komponentenkombinationstyp ein Kundenparameter, den der Benutzer unmittelbar vorgibt. Bei typischen Ausführungsformen wird der Komponentenkombinationstyp in Abhängigkeit von mehreren Kundenparametern, die nicht unmittelbar den Komponentenkombinationstyp vorgeben, bestimmt. So können in Abhängigkeit vom Maschinentyp oder vom Land Vorgaben im Rahmen des Komponentenkombinationstyps gemacht werden, beispielsweise die Einschränkung auf eine bestimmte Antriebsart eines Motors in Abhängigkeit von dem Maschinentyp.

Bei typischen Ausführungsformen der Erfindung erfolgt die obige Auswahl des Komponentenkombinationstyps und der Applikationsdaten in einem mehrstufigen Verfahren, wobei zunächst aufgrund der Kundenparameter eine Voreinstellung für eine Produktkonfiguration abgefragt wird, welche auch zu einem Komponentenkombinationstyp führen kann. Anschließend wird der Komponentenkombinationstyp anhand einer Abfrage beispielsweise der Branche oder des Maschinentyps weiter konkretisiert. So ist bei vorteilhaften Ausführungsformen der Erfindung auch die Branche ein vorteilhafter Kundenparameter. In verschiedenen Branchen sind unterschiedliche Genauigkeitsanforderungen bekannt oder üblich.

Nach Spezifizierung der Branche und des Maschinentyps kann eine Voreinstellung für Achsen oder für eine Achse geladen werden, wobei dies den Applikationsdaten entspricht bzw. die Applikationsdaten umfassen diese Parameter. Die Parameter betreffen insbesondere auch die Komponenten. Vorteilhafterweise umfassen Applikationsdaten zumindest eine der vorliegenden Größen: Positioniergenauigkeit, maximale Beschleunigung, Steifigkeit, Geschwindigkeit, Zyklenzeit, Vorschubkraft, zu bewegende Masse. Allgemein umfassen die Applikationsdaten ein Bewegungsprofil, welches zahlreiche physikalische Parameter für den Antriebsstrang umfasst.

Vorzugsweise wird der Benutzer um eine Anpassung oder Bestätigung der Applikationsdaten gebeten, um ein Anforderungsprofil für den Antriebsstrang zu erhalten. Dies bietet den Vorteil, dass der Benutzer noch einmal auf die voreingestellten Applikationsdaten Einfluss nehmen kann, beispielsweise falls der Benutzer einen Antriebsstrang mit einer höheren Steifigkeit wünscht als dies als üblich vorgegeben wird. Vorzugsweise wird der Benutzer bei dem Schritt der Anpassungs- oder Bestätigungs-Abfrage über das Eingabegerät aufgefordert, die vorgegebenen Applikationsdaten zu ändern oder zu bestätigen. Auf diese Weise kann der Benutzer aus der Ferne über das Eingabegerät Einfluss auf den weiteren Fortgang der Konfiguration nehmen. Vorzugsweise wird eine Komponentenkombination ausgewählt, die dem Komponentenkombinationstyp entspricht. Falls beispielsweise als Komponentenkombinationstyp ein Antriebsstrang aus Ritzel und Zahnstange identifiziert wird, so wird eine Komponentenkombination aus einer Komponente Ritzel und einer Komponente Zahnstange ausgewählt. Dabei ist zu berücksichtigen, dass vorzugsweise auch umfasst ist, dass eine der beiden Komponenten bereits durch den Benutzer vorgegeben werden kann. So kann das Verfahren vorzugsweise auch die genannten Schritte durchführen, falls bereits eine Komponente feststeht, beispielsweise ein Motor eines bestimmten Herstellers mit einer bestimmten Charakteristik. Das Verfahren berücksichtigt diese Randbedingungen bei Vorgabe des Komponentenkombinationstyps und auch bei Vorgabe der Applikationsdaten, wobei keine Anpassung der Parameter oder der Applikationsdaten der voreingestellten Komponente möglich ist.

Bei oder nach der Auswahl einer Komponentenkombination oder mehrerer Komponentenkombinationen werden die Betriebsparameter jeweils für jede Komponentenkombination oder für die Komponentenkombination berechnet. Dabei ist zu berücksichtigen, dass beispielsweise die Steifigkeit eines Antriebsstrangs erst nach Auswahl und Zusammenstellung aller Komponenten der Komponentenkombination berechnet werden kann.

Erfindungsgemäß wird anschließend überprüft, ob die berechneten Betriebsparameter das Anforderungsprofil erfüllen. Auf diese Weise wird eine Schnittmenge geschaffen aus Komponentenkombination, welche für den vorgegebenen Komponentenkombinationstyp in Frage kommen und solchen, welche Betriebsparameter aufweisen, die das Anforderungsprofil, in welches die Applikationsdaten eingingen, auch erfüllen. Teil des Komponentenkombinationstyps kann auch eine benötigte Übersetzung oder eine Anbauart sein.

Vorzugsweise werden mindestens zwei Komponentenkombinationen ausgewählt, die dem Komponentenkombinationstyp entsprechen. Auf diese Weise kann gegebenenfalls eine Auswahlmöglichkeit für den Benutzer geschaffen werden, falls beide oder mehrere der ausgewählten Komponentenkombinationen Betriebsparameter aufweisen, welche das Anforderungsprofil erfüllen. Für jede der Komponentenkombination werden die Betriebsparameter berechnet und mit dem Anforderungsprofil verglichen. Nur diejenigen Komponentenkombination, welche das Anforderungsprofil erfüllen, werden in eine Liste aufgenommen, welche dem Benutzer präsentiert wird.

Vorzugsweise werden die Komponentenkombinationen in einer Reihenfolge in Abhängigkeit des Vergleichs der berechneten Betriebsparameter mit dem Anforderungsprofil sortiert. Bei besonders bevorzugten Ausführungsformen wird anschließend die Reihenfolge an den Benutzer ausgegeben. Auf diese Weise erhält der Benutzer eine Reihenfolge von Komponentenkombinationen, welche seinem Anforderungsprofil am besten entsprechen oder die Anforderungen am weitesten übertreffen. Es sollte angemerkt werden, dass vorzugsweise nur Komponentenkombinationen ausgegeben werden, die dem Anforderungsprofil voll entsprechen.

Bei typischen Ausführungsformen der Erfindung wird bei einem Scheitern des Ermittelns einer Komponentenkombination für das Anforderungsprofil ein Hinweis an den Benutzer ausgegeben, an welchem Betriebsparameter oder an welchen Betriebsparametern die Suche nach geeigneten Komponentenkombinationen gescheitert ist.

Vorzugsweise erfolgt vor dem Schritt des Sortierens eine Gewichtung von Entscheidungskriterien durch den Benutzer. Das Sortieren wird dann in Abhängigkeit der Gewichtung vorgenommen. Bevorzugte Entscheidungskriterien, welche für die Gewichtung abgefragt werden, sind beispielsweise der Preis einer Komponentenkombination, die Energieeffizienz einer Komponentenkombination, eine erreichbare Positioniergenauigkeit oder auch andere Größen, welche teilweise oder vollständig mit den Applikationsdaten wie beschrieben übereinstimmen. Auf diese Weise kann der Benutzer mitteilen, welche Eigenschaft ihm besonders wichtig ist und so die Sortierung der Reihenfolge beeinflussen.

Vorzugsweise wird der Schritt der Berechnung der Komponentenkombination auf einem ersten Rechner und zumindest einer der Schritte, die eine Benutzerabfrage umfassen, auf einem entfernten zweiten Rechner durchgeführt, welcher mit dem ersten Rechner mittels eines Kommunikationsmittels verbunden ist. So ist eine Verbindung beispielsweise über das Internet als Kommunikationsmittel möglich. Dies bietet den Vorteil, dass der Benutzer von einer entfernten Stelle aus eine Komponenten- oder Antriebsstrangkonfiguration durchführen kann. Vorzugsweise werden Kundenparameter von dem zweiten Rechner auf den ersten Rechner übertragen und Applikationsdaten zur Anpassung oder Bestätigung zunächst von dem ersten Rechner auf den zweiten Rechner übertragen und nach Anpassung und Bestätigung wiederum auf den ersten Rechner übertragen.

Vorzugsweise werden bei der Auswahl der Komponentenkombination folgende Schritte durchgeführt: Vergleichen jeweils von Grob-Betriebsparametern von einer Mehrzahl von Komponentenkombination mit dem Anforderungsprofil und Auswahl zumindest der Komponentenkombinationen als ausgewählte Komponentenkombinationen, deren Grob-Betriebsparameter das Anforderungsprofil erfüllen. Bei typischen Ausführungsformen der Erfindung kann auch nur eine Komponentenkombination aufgrund des Vergleichs der Grob-Betriebsparameter mit dem Anforderungsprofil ausgewählt werden. Der Vorteil einer solchen Auswahl ist, dass sie schnell von statten gehen kann, da die Grob-Betriebsparameter vorzugsweise in einer Datenbank in einem Speicher hinterlegt sind. Grob-Betriebsparameter können beispielsweise Steifigkeiten von vorbestimmten Komponentenkombinationen sein.

Vorzugsweise werden die Grob-Betriebsparameter für vorbestimmte Komponentenkombinationen vorausberechnet und in einem Speicher abgespeichert, bevor eine Abfrage eines Kundenparameters erfolgt. Besonders bevorzugt werden die vorbestimmten Komponentenkombinationen aus einer Gesamtzahl von möglichen Kombinationen von Komponenten durch einen Administrator ausgewählt oder aus einer Tabelle abgefragt. Dabei wird vorzugsweise auf die Sinnhaftigkeit der Kombinationen Rücksicht genommen. Für diese vorbestimmten Komponentenkombinationen werden Grob-Betriebsparameter vorausberechnet. Dabei muss sich das Wort "grob" nicht notwendigerweise auf nur eine ungenaue Berechnung beziehen, wobei dies auch möglich ist. Eine weitere Möglichkeit, die von "grob" umfasst ist, ist, dass Betriebsparameter für eine Komponentenkombination in einer bestimmten Umgebung berechnet werden, die besonders häufig auftritt. Dies bietet einen Vorteil, da in der Regel bei Änderungen der Umgebungsbedingungen die Betriebsparameter von Komponentenkombinationen sich nicht übermäßig stark ändern. Außerdem ist häufig bekannt, dass sich Betriebsparameter in Abhängigkeit von Umwelteinflüssen insbesondere in eine Richtung entwickeln. So wird in der Regel eine Komponentenkombination, welche bei 20°C eine geforderte Drehzahl nicht einhalten kann, diese bei 60°C auch nicht oder "erst recht nicht" einhalten können. So kann es beispielsweise auch sein, dass bei Vorgabe einer außergewöhnlich hohen Betriebstemperatur ein übertragbares Drehmoment oder eine maximal erreichbare Geschwindigkeit herabgesetzt sind. Gleichwohl kann anhand einer bei Normaltemperatur möglichen maximalen Geschwindigkeit eine Vorauswahl von Komponentenkombinationen für das Anforderungsprofil vorgenommen werden. Das Vorgehen bietet den Vorteil, dass die Berechnung der Betriebsparameter vorzugsweise in Echtzeit vorgenommen werden kann. Dabei bedeutet "Echtzeit" eine Zeit von vorzugsweise weniger als 60 Sekunden, noch bevorzugter weniger als 10 Sekunden.

Die Berechnungszeit kann weiter verringert werden, indem überprüft wird, ob für eine Komponentenkombination abgespeicherte Grob-Betriebsparameter vorliegen und, falls ja, die Betriebsparameter auf Grundlage der Grob-Betriebsparameter berechnet werden. Dies bietet den Vorteil, dass eine Rechnung nicht vollständig neu begonnen werden muss. So sind vorzugsweise die Grob-Betriebsparameter parametrisiert oder in Gleichungen hinterlegt, sodass mit den Applikationsdaten einfach und schnell die Betriebsparameter aufgrund der so gespeicherten Grob-Betriebsparameter berechnet werden können.

### Kurze Beschreibung der Zeichnungen

Nachfolgend werden bevorzugte Ausführungsbeispiele an Hand der beiliegenden Zeichnungen erläutert, wobei die Zeichnungen zeigen:
- Figur 1: zeigt schematisch in einem Ablaufdiagramm eine bevorzugte Ausführungsform der Erfindung,
- Figur 2: zeigt schematisch in einem Ablaufdiagramm einen Teil eines erfindungsgemäßen Verfahrens, der vorzugsweise vor dem Verfahrensteil der Figur 1 durchgeführt wird,
- Figur 3: zeigt schematisch in einem Ablaufdiagramm eine Variante für das Verfahren der Figur 1, und
- Figur 4: zeigt schematisch den Aufbau einer Vorrichtung zur Durchführung eines erfindungsgemäßen Verfahrens.

### Beschreibung bevorzugter Ausführungsformen

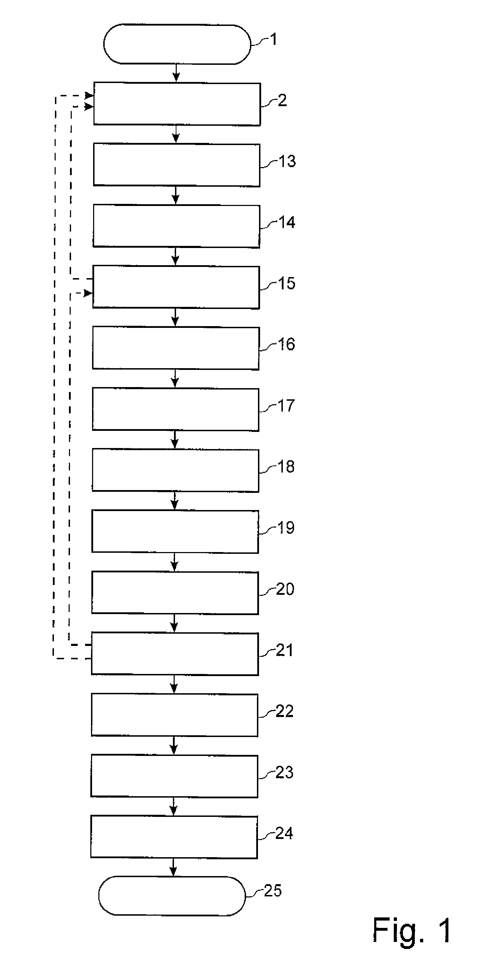

In der Figur 1 ist schematisch ein Ablaufdiagramm eines erfindungsgemäßen Verfahrens gezeigt. Das Verfahren startet auf einem Server, der an das Internet angeschlossen ist, mit einem Schritt 1. Anschließend werden in einem Schritt 2 Kundenparameter mittels eines Eingabegeräts, genauer gesagt, eines Benutzer-Computers, welcher ebenfalls an das Internet angeschlossen ist, abgefragt. Diese Abfrage geschieht in Schritt 2. In Abhängigkeit von den angegebenen Kundenparametern wird in einem Schritt 13 ein Komponentenkombinationstyp vorgegeben. Der Komponentenkombinationstyp beschreibt die Art der Komponenten der Kombination, also beispielsweise Ritzel, Zahnstange und Getriebe für den Antriebsstrang.

Allgemein ist das Wort "Antriebsstrang" in dieser Anmeldung vorzugsweise allgemein auszulegen, dass heißt, dass auch lediglich Getriebe oder Ritz-Zahnstangen-Kombinationen ohne Motor als Antriebsstrang bezeichnet werden können. Der Benutzer hat die Möglichkeit, später einen Motor oder ein Bewegungsprofil hinzuzufügen.

Kundenparameter sind bei dem erfindungsgemäßen Verfahren insbesondere ein Land, in welchem der Antriebsstrang betrieben werden soll, ein Maschinentyp, in welchem der Antriebsstrang eingesetzt werden soll, der Komponentenkombinationstyp und eine Branche des Benutzers.

Nach dem Schritt 13 wird in einem Schritt 14 ein Applikationsdatensatz in Abhängigkeit der eingegebenen Kundenparameter vorgegeben. Der Applikationsdatensatz umfasst Applikationsdaten, wie eine maximal erreichbare Beschleunigung, eine Positioniergenauigkeit, eine Steifigkeit, eine maximal erreichbare Geschwindigkeit, eine Zyklenzahl, allgemein ein Bewegungsprofil, eine Vorschubkraft oder eine zu bewegende Masse. Der Applikationsdatensatz kann Untersätze betreffend bestimmt Achsen umfassen. Die Applikationsdaten werden an das Eingabegerät des Benutzers übertragen und dort dem Benutzer in einem Schritt 15 präsentiert. Es sollte angemerkt werden, dass bei der Vorgabe der Applikationsdaten im Schritt 14 auch berücksichtigt wird, in welchem und in welcher Branche und bei welchem Maschinentyp der Antriebsstrang eingesetzt werden soll, um beispielsweise nationale Spannungsebenen mit zu berücksichtigen. Der Kunde kann dann im Schritt 15 die Applikationsdaten anpassen oder bestätigen.

Nachdem der Kunde im Schritt 15 eine Anpassung oder Bestätigung der Applikationsdaten vorgenommen hat, wird im Schritt 16 ein Anforderungsprofil auf Grundlage der Applikationsdaten erstellt. Sollte der Benutzer im Schritt 15 keine Anpassung, sondern lediglich eine Bestätigung aller voreingestellten Applikationsdaten vornehmen, so entspricht das Anforderungsprofil den Applikationsdaten.

Grundsätzlich ist es für den Benutzer möglich, in den einzelnen Schritten auch noch einmal zurück zu springen. So kann der Benutzer auch vom Schritt 15 noch einmal zum Schritt 2 zurück springen, in welchem Kundenparameter abgefragt werden. Dies kann beispielsweise dann für den Kunden oder Benutzer interessant sein, falls er bei Übermittlung der Applikationsdaten feststellt, dass eventuell bei Eingabe der Kundenparameter, wie dem Maschinentyp, bei dem der Antriebsstrang eingesetzt werden soll, unter Umständen ein Fehler begangen wurde. Auch zu späteren Zeitpunkten hat der Kunde die Möglichkeit, wiederum zu dem Schritt 2 oder 15, in welchen der Benutzer die Möglichkeiten hat, auf das Verfahren Einfluss zu nehmen, zurück zu springen.

In einem Schritt 17 wird mit der Auswahl von einer oder mehreren Komponentenkombinationen, welche Komponenten des zu konfigurierenden Antriebsstrangs umfassen, begonnen. Dabei wird in Schritt 17 zunächst eine Auswahl aus einer Datenbank mit Komponenten getroffen, wobei Komponentenkombinationen zusammengestellt werden, welche dem Komponentenkombinationstyp entsprechen. An dieser Stelle sollte angemerkt werden, dass auch der Benutzer zumindest eine der Komponenten vorgeben kann, sodass unter Umständen nur noch eine zusätzliche Komponente im Schritt 17 automatisch durch das Verfahren ausgewählt werden muss, wobei dabei darauf zu achten ist, dass die auszuwählende Komponente zu der vom Benutzer vorgegebenen Komponente passt.

In einem Schritt 18 wird überprüft, ob für bereits festgestellte Komponentenkombinationen Grob-Betriebsparameter in einer Datenbank abgespeichert sind. Die Grob-Betriebsparameter können beispielsweise Betriebsparameter sein, die bei einer Temperatur von 20 °C erreicht werden. Diese Grob-Betriebsparameter werden mit dem Anforderungsprofil verglichen, wobei an dieser Stelle keine exakte Übereinstimmung gefordert wird. So kann beispielsweise darauf verzichtet werden, zu überprüfen, ob eine Komponentenkombination bei einer speziellen Betriebstemperatur erforderliche Leistungskennwerte erbringt und einfach auf die Leistungskennwerte bei der oben angegebenen Standardtemperatur zurückgegriffen werden. Im Schritt 18 werden sämtliche Komponentenkombinationen, deren Grob-Betriebsparameter dem Anforderungsprofil derart entsprechen, ausgewählt. Auf diese Weise wird mit der oben beschriebenen Auswahl im Schritt 17 eine Schnittmenge ausgewählt. Es sollte hinzugefügt werden, dass im Schritt 17 Komponentenkombinationen auch dahingehend ausgewählt werden, so dass ein Übersetzungsverhältnis, Einbaumöglichkeiten, Anschlussmöglichkeiten oder andere Randbedingungen mit dem Komponentenkombinationstyp übereinstimmen.

In einem Schritt 19 wird nachfolgend auf den Schritt 18 für alle Parameter von Komponentenkombinationen, für welche keine Grob-Betriebsparameter vorliegen, eine Berechnung der Betriebsparameter vorgenommen. Außerdem wird im Schritt 19 für alle ausgewählten Komponentenkombinationen, für welche Grob-Betriebsparameter vorliegen, eine genaue Berechnung der Betriebsparameter vorgenommen, an dieser Stelle mit den Benutzervorgaben in Form der Kundenparameter oder/und Applikationsdaten. In einem Schritt 20 werden dann noch einmal alle Komponentenkombinationen daraufhin überprüft, ob sie das Anforderungsprofil erfüllen. Die Komponentenkombinationen, welche das Anforderungsprofil nicht erfüllen, werden aussortiert. Außerdem wird bei dieser Überprüfung im Schritt 20 bereits festgestellt, inwieweit die einzelnen Komponentenkombination das Anforderungsprofil erfüllen, beispielsweise ob sie geforderte Mindestwerte nur knapp einhalten oder geforderte Mindestwerte deutlich überschreiten. Anhand dieser Feststellungen wird eine Reihenfolge der Komponentenkombinationen erstellt, welche die Eignung der jeweiligen Komponentenkombination für das Anforderungsprofil wiedergibt.

Anschließend kann der Benutzer in einem Schritt 21 Entscheidungskriterien gewichten. Entscheidungskriterien, welche der Benutzer im Schritt 21 gewichten kann, sind insbesondere die Kosten der Komponentenkombination, eine Positioniergenauigkeit, eine Steifigkeit und eine Geschwindigkeit der Komponentenkombination. Nach Abfrage dieser Gewichtung im Schritt 21 wird im Schritt 22 noch einmal eine Reihenfolge der Komponentenkombination festgelegt, diesmal unter Berücksichtigung der von dem Benutzer angegebenen Gewichtung. Alternativ kann der Benutzer im Schritt 21 auch wiederum entscheiden, zu einem der Schritte 2 oder 15 zurück zu springen, um nochmals Eingaben zu ändern.

In einem Schritt 23 wird dem Benutzer das Ergebnis der Reihenfolge ausgegeben. Der Benutzer kann dann eine Komponentenkombination wählen und in einem Schritt 24 für diese Komponentenkombination Zeichnungen erstellen lassen, Positionszahlenlisten erstellen lassen, eine Bestellung aufgeben, die unmittelbar zu einer Produktion der Komponentenkombination führt. oder sich einfach die entsprechenden errechneten Daten ausdrucken lassen. Das Verfahren endet in einem Schritt 25.

Bei typischen Ausführungsformen der Erfindung wird der Benutzer gefragt, ob er eine der Komponentenkombination, die ihm ausgegeben wird, bestellen möchte. Falls ja, erfolgt vorzugsweise der Schritt: Produzieren der ausgewählten und bestellten Komponentenkombination, um den Antriebsstrang zu erhalten. Dies kann bei vorteilhaften Ausführungsformen, wie in der Figur 1 dargestellt in Schritt 24 vorgenommen werden.

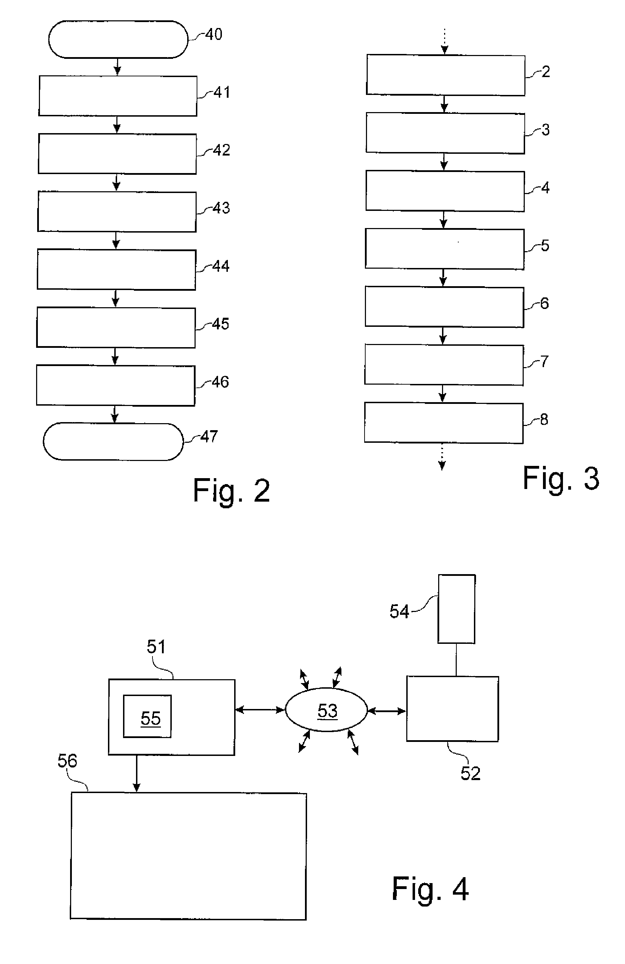

In der Figur 2 ist dargestellt, wie die Vorausberechnung der Grob-Betriebsparameter mit dem Verfahren der Figur 1 zusammenwirkt. Das Verfahren der Figur 2 wird ausgeführt, bevor das Verfahren der Figur 1 durchgeführt wird. Es ist ausreichend, das Verfahren der Figur 2 einmal für bestimmte Kombinationen durchzuführen und die Ergebnisse in einem Speicher abzulegen. Zusammen ergeben die Verfahren der Figuren 1 und 2 eine besonders bevorzugte Ausführungsform der Erfindung, die den Vorteil hat, mit kurzer Berechnungszeit Informationen für den Benutzer generieren zu können. Der Grund ist, dass das Verfahren der Figur 1, welches die Interaktion mit dem Benutzer beinhaltet, auf die Ergebnisse des Verfahrens der Figur 2 zurück greifen kann.

Das Verfahren der Figur 2 zur Vorausberechnung der Grob-Betriebsparameter beginnt mit einem Schritt 40. Nachfolgend wird in einem Schritt 41 ein Datensatz umfassend sämtliche Komponenten, welche bei den Verfahren der Figuren1 möglicherweise in Antriebssträngen eingesetzt werden können, eingelesen. Daraufhin werden in einem Schritt 42 sämtliche dieser Komponenten auf ihre Kombinierbarkeit in Bezug auf Einbau- oder Anbaumaße oder vergleichbare Parameter überprüft. Diese Vorauswahl in Schritt 42 stellt grundsätzlich mögliche Komponentenkombinationen aus der Gesamtmenge der Komponenten zusammen. Anschließend werden in einem Schritt 43 automatisiert als sinnvoll erscheinende Komponentenkombinationen ausgewählt, beispielsweise solche, bei welchen maximal übertragbare Momente, Positioniergenauigkeit oder maximal erreichbare Geschwindigkeiten und bewegte Massen grob zusammenpassen. Außerdem wird diese Auswahl in einem Schritt 44 durch einen Administrator und/oder über Konfigurationsdateien oder -tabellen überprüft. Der Administrator kann in dem Schritt 44 zusätzliche Komponentenkombinationen vorgeben oder auch bereits im Schritt 43 automatisch ausgewählte Komponentenkombinationen aus der Liste streichen. Im Schritt 45 werden dann für alle übrig gebliebenen Komponentenkombinationen Berechnungen durchgeführt, wobei Grob-Betriebsparameter, dass heißt Betriebsparameter bei Standardbedingungen-und Einbausituationen berechnet werden. Anschließend werden die berechneten Daten in einem Speicher in Schritt 46 abgelegt. Das Verfahren endet im Schritt 47.

In der Figur 3 ist gezeigt, wie der Benutzer in einem mehrstufigen Verfahren Kundenparameter in das System eingeben kann. In der Figur 3 ist die alternative Eingabe in Form von Zusatzschritten für den Schritt 2 gezeigt. So wird im Schritt 2 lediglich durch den Benutzer eine allgemeine Produktkonfiguration ausgewählt, welche einem Typ von Komponentenkombinationen entspricht. Dies können beispielsweise Ritzel/Zahnstangen-Kombinationen, Motor-Getriebe-Kombinationen oder Getriebe-Kombinationen sein. Aufgrund dieser Eingabe wird im Schritt 3 der Benutzer aufgefordert, die Branche und den Maschinentyp zu spezifizieren. Damit spezifiziert der Benutzer bereits Kundenparameter.

Im nachfolgenden Schritt 4 werden dann aus einer Datenbank Voreinstellungen für Achsen in Abhängigkeit des Komponentenkombinationtyps und/oder der Kundenparameter geladen, zum Beispiel Positioniergenauigkeit, maximale Beschleunigung, Geschwindigkeit oder Zyklenzahl. Diese Voreinstellungen oder Applikationsdaten kann der Kunde anschließend im Schritt 5 ändern oder anpassen. Im Schritt 6 werden dann ausgehend von der in Schritt 5 vorgenommenen Achskonfiguration, das heißt, die geänderten oder angepassten Parameter des Schrittes 4, Komponentenkonfigurationen mit Komponentenkonfigurationsdaten geladen, welche vollständige Informationen umfassen. Solche Komponentenkonfigurationsdaten können zum Beispiel ein Bewegungsprofil oder eine spezielle Getriebeausführung, z.B. eine Wash-Down-Version für die Lebensmittelbranche, sein.

In einem Schritt 7 kann der Benutzer nun wiederum diese Komponentenkonfigurationen bearbeiten, um die Kundenparameter zu erhalten. Damit ist ein mehrstufiger iterativer Prozess geschaffen, in welchem der Benutzer die Kundenparameter festlegt. Im Schritt 8 wird dann wiederum das Anforderungsprofil und der Komponentenkombinationstyp in Abhängigkeit der Kundenparameter festgelegt und damit in dem Verfahren der Figur 1 in Schritt 17 fortgefahren. Es sollte wiederum angemerkt werden, dass auch das Verfahren der Figur 3 Rücksprünge zulässt, beispielsweise falls der Benutzer Einstellungen, die er in vorherigen Schritten vorgenommen hatte, nochmals ändern möchte.

Allgemein kann die Konfiguration der Figur 3 für einzelne Achsen als auch komplette System, wie z.B. Handlingsroboter, mit mehreren Achsen erfolgen.

In der Figur 4 ist eine vorteilhafte Vorrichtung zur Ausführung eines der beschriebenen vorteilhaften oder erfindungsgemäßen Verfahren gezeigt, wobei die Vorrichtung vorzugsweise einen weiteren Aspekt der Erfindung darstellt. Die Vorrichtung umfasst einen ersten Rechner 51 und einen zweiten Rechner 52, die über ein Kommunikationsmittel 53, nämlich das Internet, verbunden sind. Der zweite Rechner 52 weist ein Eingabeterminal 54 als Eingabegerät auf und der erste Rechner 51 umfasst einen Speicher 55, in welchem vorausberechnete Größen abgespeichert sind. Außerdem ist der erste Rechner 51 mit einer Produktionseinrichtung 56 verbunden, die geeignet ist, eine bestellte Komponentenkombination zusammenzustellen und zusammenzubauen. Bei Ablauf der Verfahren der vorhergehenden Figuren werden die Berechnungsschritte auf dem ersten Rechner 51 und die Schritte, die eine Interaktion mit dem Benutzer umfassen, auf dem Rechner 52 durchgeführt.

## Patentansprüche

1. Verfahren zur Konfiguration eines Antriebsstrangs, insbesondere für einen elektrisch oder hydraulisch angetriebenen Antriebsstrang, mit den Schritten:
- Abfrage zumindest eines Kundenparameters mittels eines Eingabegeräts von einem Benutzer und Vorgabe eines Komponentenkombinationstyps in Abhängigkeit von dem Kundenparameter,
- Vorgabe von Applikationsdaten für den Komponentenkombinationstyp in Abhängigkeit des zumindest einen Kundenparameters,
- Anpassungs- und/oder Bestätigungs-Abfrage der Applikationsdaten mittels des Eingabegeräts, um ein Anforderungsprofil für den Antriebsstrang zu erhalten,
- Auswahl einer Komponentenkombination, die dem Komponentenkombinationstyp entspricht,
- Berechnung von Betriebsparametern für die Komponentenkombination und
- Überprüfen, ob die Betriebsparameter das Anforderungsprofil erfüllen.

2. Verfahren nach Anspruch 1, **gekennzeichnet durch**:
- Auswahl von mindestens zwei Komponentenkombinationen, die dem Komponentenkombinationstyp entsprechen,
- Berechnung von Betriebsparametern für jede der Komponentenkombination und
- Vergleich für jede Komponentenkombination der jeweiligen berechneten Betriebsparameter mit dem Anforderungsprofil,
- Überprüfen, ob die jeweiligen Betriebsparameter das Anforderungsprofil erfüllen und
- Sortieren der Komponentenkombinationen in einer Reihenfolge in Abhängigkeit des jeweiligen Vergleichs.

3. Verfahren nach einem der vorhergehenden Ansprüche, **dadurch gekennzeichnet, dass** bei der Auswahl der Komponentenkombination folgende Schritte durchgeführt werden:
- Vergleichen jeweils von Grob-Betriebsparametern von einer Mehrzahl von Komponentenkombinationen mit dem Anforderungsprofil,
- Auswahl zumindest der Komponentenkombinationen als ausgewählte Komponentenkombinationen, deren Grob-Betriebsparameter das Anforderungsprofil erfüllen.

4. Verfahren nach Anspruch 3, **dadurch gekennzeichnet, dass** vor dem Schritt der Abfrage eines Kundenparameters folgender Schritt durchgeführt wird:
- Vorausberechnen von Grob-Betriebsparametern für vorbestimmte Komponentenkombinationen und
- Abspeichern der Grob-Betriebsparameter in einem Speicher.

5. Verfahren nach einem der vorhergehenden Ansprüche, **dadurch gekennzeichnet, dass** bei dem Schritt des Berechnen von Betriebsparametern folgende Schritte ausgeführt werden:
- Überprüfen, ob für eine Komponentenkombination abgespeicherte Grob-Betriebsparameter vorliegen, und
- Berechnen der Betriebsparameter auf Grundlage der Grob-Betriebsparameter, falls abgespeicherte Grob-Betriebsparameter vorliegen.

6. Verfahren nach einem der vorhergehenden Ansprüche, **dadurch gekennzeichnet, dass** der Kundenparameter zumindest einer ist aus:
- ein Land, in welchem der Antriebsstrang betrieben werden soll,
- ein Maschinentyp, in welchem der Antriebsstrang eingesetzt werden soll,
- eine Produktkonfiguration,
- eine Branche.

7. Verfahren nach einem der vorhergehenden Ansprüche, **dadurch gekennzeichnet, dass** die Applikationsdaten zumindest eine der folgenden Größen betrifft: maximale Beschleunigung, Positioniergenauigkeit, Steifigkeit, Geschwindigkeit, Zyklenzahl, Bewegungsprofil, Vorschubkraft und/oder zu bewegende Masse.

8. Verfahren nach einem der vorhergehenden Ansprüche, **dadurch gekennzeichnet, dass** bei dem Schritt der Anpassungs- und/oder Bestätigungs-Abfrage der Benutzer über das Eingebegerät aufgefordert wird, die vorgegebenen Applikationsdaten zu ändern und/oder zu bestätigen.

9. Verfahren nach einem der Ansprüche 2 bis 8, **dadurch gekennzeichnet, dass** vor dem Schritt des Sortierens eine Gewichtung von Entscheidungskriterien bei einem Benutzer abgefragt werden und das Sortieren der Komponentenkombinationen in Abhängigkeit der Gewichtung vorgenommen wird.

10. Verfahren nach einem der vorhergehenden Ansprüche, **dadurch gekennzeichnet, dass** der Schritt der Berechnung der Komponentenkombination auf einem ersten Rechner und zumindest einer der Schritte, die einer Benutzer-Abfrage umfassen, auf einem entfernten zweiten Rechner erfolgen, der mit dem ersten Rechner verbunden ist.

11. Computerprogrammprodukt, das ein Programm umfasst, das bei einem Ausführen auf einem Computer ein Ablauf eines Verfahrens nach einem der Ansprüche 1 bis 10 bewirkt.
